# EUROPEAN PATENT APPLICATION

(11) **EP 4 625 302 A1**
(43) Date of publication of application: **01.10.2025**
(21) Application number: 24166964.7
(22) Date of filing: 27.03.2024
(51) Int. Cl.: G06Q 50/06

(54) **SYSTEM FOR REGISTERING UNKNOWN OBJECTS INTO A DEVICE MANAGEMENT SYSTEM, AND A METHOD THEREOF**

(71) Applicant: Hitachi Energy Ltd, 8050 Zürich (CH)
(72) Inventor: DECK, Bernhard, 79809 Weilheim (DE); REJIBA, Zeineb, 8064 Zurich (CH); DAN, Andrei-Marian, 8112 Otelfingen (CH); SIPOWICZ, Jakub, 30-348 Krakow (PL)
(74) Representative: Zacco Sweden AB

(57) **Abstract**

Embodiments of the present disclosure provide a system (200) and method (300) for registering unknown objects into a device management system. The method comprises receiving (302), through a processor (204), one or more object data related to an object. The object is unknown to the device management system. The method further comprises extracting (304) one or more object identifiers from the one or more object data to identify the one or more objects, transmitting (306) the one or more object identifiers to an external source to identify a refined information about the object. The refined information is used to classify the object. The method further comprises registering (308) the object with the device management system according to the classification of the object.

## Description

### TECHNICAL FIELD

The present disclosure relates generally to a field of fleet management, FLM system. More particularly, it is related to a system and method for registering unknown objects into a device management system.

### BACKGROUND

Companies, especially utilities, need to comprehensively track assets and inventories including devices, equipment, vehicles, etc. of the company which is referred to as fleet. A system that provides an overview of the fleet is called a fleet management, FLM system. The FLM system are designed to oversee and manage the fleet, allowing users to track specific assets by details like manufacturer of the asset, serial number, and/or type of the asset. Modern systems also provide location and status updates for each asset.

Ideally, new devices are registered seamlessly within the FLM system, capturing unique identification details. Most of the FLM systems struggle with registering devices/products from unknown brands or devices/products lacking standard identification such as barcodes. Decoding and interpreting barcodes may also lead to registration failures. Thus, either registration of the unknown brands or devices are not possible or manual registration process may be performed to register the unknown devices. However, the manual registration process is error prone and time consuming. As only branded devices/products gets registered in the FLM system, the manual registration process for unknown devices or lacking standard identification may lead to incomplete registration in the FLM system.

Thus, current FLM system may not provide a comprehensive view of the entire fleet, especially when dealing with unbranded or non-standard assets (referred to as unknown objects).

### SUMMARY

Consequently, there is a need for an improved system and a method for registering unknown objects into a device management system.

It is therefore an object of the present disclosure to provide a system and a method registering unknown objects into a device management system, which mitigate, alleviate, or eliminate all or at least some of the above-discussed drawbacks of presently known solutions.

This and other objects are achieved by means of a system and a method, as defined in the appended claims. The term exemplary is in the present context to be understood as serving as an instance, example or illustration.

According to a first aspect of the present disclosure, a system for registering unknown objects into a device management system is provided. The system comprises a processor and a memory. The memory arranged to store a plurality of instructions to be executed by the processor. The processor is arranged for receiving one or more object data related to an object. The object is unknown to the device management system. The processor is further arranged for extracting one or more object identifiers from the one or more object data to identify the one or more objects. The processor is further arranged for transmitting the one or more object identifiers to an external source to identify a refined information about the object, wherein the refined information is used to classify the object. The processor is further arranged for registering the object with the device management system according to the classification of the object.

Advantageously, embodiments herein provide a system in which unknown objects are registered to the device management system without manual registration process. In the system, object identifiers of the object which is unknown to the device management system are extracted. The object identifiers are extracted by applying an Artificial Intelligence (AI) based image recognition method. Further, the object identifiers are transmitted to an external source to identify refined information about the object. The refined information helps to classify the objects. Thus, the system provides an automated and effective way to register objects, which were initially unknown to the device management system.

In some embodiments, the object comprises electrical grid devices.

In some embodiments, the one or more object data comprises one or more images of the object.

In some embodiments, the one or more object identifiers comprises at least one of text elements, serial numbers, information about manufacture of the object, device type when the object is a device, color of the object, context information associated with the object, labels over the one or more objects.

In some embodiments, the one or more object identifiers are extracted by applying an Artificial Intelligence (AI) based image recognition method over the one or more object identifiers.

Advantageously, the proposed embodiment provides automated method by extracting object identifiers of the objects by applying Artificial Intelligence (AI) based image recognition methods.

In some embodiments, the external source comprises at least one of websites, soft copies of a document in at least one of a pdf or word document, other image documents, and user inputs.

In some embodiments, the one or more additional details are identified through a Large Language Model (LLM), wherein the LLM maps the one or more object identifiers to an information present in the external source to generate the refined information.

Advantageously, the proposed system provides a Large Language Model (LLM) to map the object identifiers to information present in the external source to generate the refined information. The refined information helps the system to classify the objects and identify the object in a correct category.

In some embodiments, the refined information comprises at least one of features of the object, model and type of the object, and the source of generating the refined information.

In some embodiments, the processor is arranged for storing information about the sources used to identify the refined information about the object.

In some embodiments, the processor is arranged for receiving a user request regarding a replacement device for an existing device to be identified in the device management system. The processor is further arranged for extracting, through the processor, one or more device identifiers from one or more input data associated with the existing device. The processor is further arranged for comparing the one or more input data with at least one of the: one or more object identifiers, the refined information of the registered device and information about the sources. The processor is further arranged for suggesting the replacement device for replacing the existing device based on the search.

Advantageously, the proposed system provides a suggestion to replace certain devices. The LLM module of the device management system uses several sources of information such as information about model of the device and capabilities to suggest a replacement.

According to a second aspect of the present disclosure, a computer implemented method for registering unknown objects into a device management system is provided. The method comprises receiving, through a processor, one or more object data related to an object. The object is unknown to the device management system. The method further comprises extracting, through the processor, one or more object identifiers from the one or more object data to identify the one or more objects. The method further comprises transmitting, the one or more object identifiers to an external source to identify a refined information about the object, wherein the refined information is used to classify the object. The method further comprises registering the object with the device management system according to the classification of the object.

Advantageously, embodiments herein provide a method for registering unknown to the device management system without any manual registration process. The method includes extracting object identifiers of the object which is unknown to the device management system. The object identifiers are extracted by applying an Artificial Intelligence (AI) based image recognition method. Further, the object identifiers are transmitted to an external source to identify refined information about the object. The refined information helps to classify the objects. Thus, the method provides an automated and effective way to register objects, which were initially unknown to the device management system.

In some embodiments, the one or more object data comprises one or more images or video of the object.

In some embodiments, the one or more object identifiers comprises at least one of text elements, serial numbers, information about manufacture of the object, device type when the object is a device, color of the object, context information associated with the object, labels over the one or more objects.

In some embodiments, the one or more object identifiers are extracted by applying an Artificial Intelligence (AI) based image recognition method over the one or more object identifiers.

Advantageously, the proposed embodiment provides an automated method by extracting object identifiers of the objects by applying Artificial Intelligence (AI) based image recognition methods.

In some embodiments, the external source comprises at least one of websites, soft copies of a document in at least one of a pdf or word document, other image documents, schematics, construction drawings, part lists, bill of materials, BOM and user inputs.

In some embodiments, the one or more additional details are identified through a Large Language Model (LLM), wherein the LLM maps the one or more identifiers to an information present in the external source to generate the refined information.

Advantageously, the proposed method maps the object identifiers to information present in the external source to generate the refined information using a Large Language Model (LLM). The refined information helps the system to classify the objects and identify the object in a correct category.

In some embodiments, the refined information comprises at least one of features of the object, model and type of the object, and the source of generating the refined information.

In some embodiments, the method comprises storing information about the sources used to identify the refined information about the object.

In some embodiments, the method comprises receiving a user request regarding a replacement device for an existing device to be identified in the device management system. The method further comprises extracting, through the processor, one or more device identifiers from one or more input data associated with the existing device. The method further comprises comparing the one or more input data with at least one of the: one or more object identifiers, the refined information of the registered device and information about the sources. The method further comprises suggesting the replacement device for replacing the existing device based on the search.

Advantageously, the proposed method provides a suggestion to replace certain devices. The LLM module of the device management system uses several sources of information such as information about model of the device and capabilities to suggest a replacement.

Other advantages may be readily apparent to one having skill in the art. Certain embodiments may have some, or all of the recited advantages.

### BRIEF DESCRIPTION OF THE DRAWINGS

The foregoing will be apparent from the following more particular description of the example embodiments, as illustrated in the accompanying drawings in which like reference characters refer to the same parts throughout the different views. The drawings are not necessarily to scale, emphasis instead being placed upon illustrating the example embodiments.
FIG. 1 discloses a wireless communication system according to some embodiments;
FIG. 2 shows a schematic block diagram illustrating an example system for registering unknown objects into a device management system according to some embodiments;
FIG. 3 shows a flowchart illustrating example steps for a method registering unknown objects into the device management system according to some embodiments;
FIG. 4 shows an example system diagram for registering unknown objects into the device management system according to some embodiments;
FIG. 5 shows an example flow diagram showing example steps for registering unknown objects into the device management system according to some embodiments;
FIG. 6 shows an example flow diagram showing example steps for suggesting replacement device in the system according to some embodiments; and
FIG. 7 shows an example computing environment according to some embodiments.

### DETAILED DESCRIPTION

Aspects of the present disclosure will be described more fully hereinafter with reference to the accompanying drawings. The system and method disclosed herein can, however, be realized in many different forms and should not be construed as being limited to the aspects set forth herein. Like numbers in the drawings refer to like elements throughout.

The terminology used herein is for the purpose of describing particular aspects of the disclosure only and is not intended to limit the invention. It should be emphasized that the term "comprises/comprising" when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Embodiments of the present disclosure will be described and exemplified more fully hereinafter with reference to the accompanying drawings. The solutions disclosed herein can, however, be realized in many different forms and should not be construed as being limited to the examples set forth herein.

In the following description of exemplary embodiments, the same reference numerals denote the same or similar components.

In prior art, most of fleet management, FLM systems struggle with registering devices/products from unknown brands or devices/products lacking standard identification such as barcodes. Decoding and interpreting barcodes may also lead to registration failures. Manual registration process to address such issues is error prone and time consuming. Thus, existing FLM system may not provide a comprehensive view of the entire fleet, especially when dealing with unbranded or non-standard assets (referred to as unknown objects).

In contrast to the prior art, embodiments herein provide a system in which and a method for registering unknown objects into a device management system. The device management system also may refer to a fleet management, FLM system.

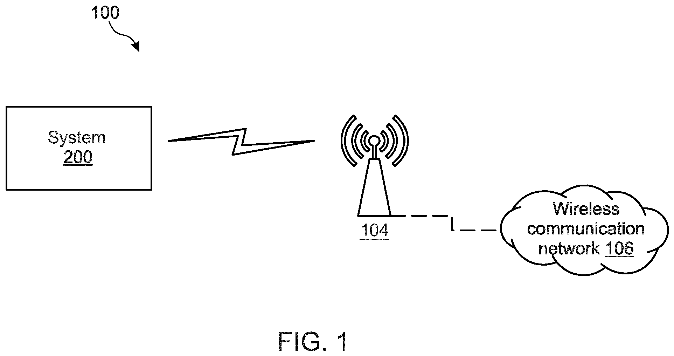

FIG. 1 discloses an example wireless communication system (100). Although the subject matter described herein may be implemented in any appropriate type of system using any suitable components, the examples disclosed herein are described in related to a wireless communication system/wireless network, such as the example wireless communication system (100) described in FIG. 1.

The wireless communication system (100) may comprise and/or interface with any type of communication, telecommunication, data, cellular, and/or radio network or other similar type of system. The wireless communication system (100) may be configured to operate according to specific standards or other types of predefined rules of procedures. Thus, the wireless communication system (100) may implement communication standards, such as, but are not limited to, global system for mobile communications, GSM, universal mobile telecommunications system, UMTS, long term evolution, LTE, and/or other suitable 2G, 3G, 4G, or 5G standards, wireless local area network, WLAN, standards such as, IEEE 802.11 standards, and/or any other appropriate wireless communication standards, such as, worldwide interoperability for microwave access, WiMax, Bluetooth, Z-Wave and/or ZigBee standards.

For simplicity, as depicted in FIG. 1, the wireless communication system (100) comprises a system (2000), a network node (104), and a network (106). The system (200) and the network node (104) operate together in order to provide wireless connections in the wireless communication system (100). The network (106) may comprise one or more backhaul networks, core networks, IP networks, public switched telephone networks, PSTNs, packet data networks, optical networks, wide-area networks, WANs, local area networks, LANs, wireless local area networks, WLANs, wired networks, wireless networks, metropolitan area networks, and other networks to enable communication between devices (for example, wireless devices and network node).

In an example, the network node (104) refer to equipment capable, configured, arranged, and/or operable to communicate directly or indirectly with the system (200) and/or with other network nodes or equipment in the wireless communication system (100) to enable and/or provide wireless access to the system (200) and/or to perform other functions (for example, administration) in the wireless communication system (100). Examples of the network node (104) may include, but are not limited to, access points, APs (for example, radio access points), base stations, BSs (for example, radio base stations, nodeBs, evolved NodeBs, eNBs, new radio, NR, nodes (gNBs), or the like). The BSs may be categorized based on an amount of coverage the BSs provide (or, stated different, their transmit power level) and may then also be referred to as femto BSs, pico BSs, micro BSs, macro BSs. The BS may be a relay node or a relay donor node controlling a relay.

The system (200) refers to a device capable, configured, arranged and/or operable to communicate wirelessly with the network node (104) and/or other wireless devices.

In some examples, the system (200) may include one or more of: computing devices, wireless devices, ultra-low power wireless devices, Internet of Things, IoT, devices, and so on.

Examples of the computing devices may include, but are not limited to, a smart phone, a mobile phone, a cell phone, a voice over Internet Protocol, IP, VoIP, phone, a wireless local loop phone, a desktop computer, a personal digital assistant, PDA, a wireless camera, a gaming console or device, a wearable terminal device, a wireless endpoint, a mobile station, a tablet, a laptop, a laptop-embedded equipment, LEE, a laptop-mounted equipment, LME, a smart device, a wireless customer-premise equipment, CPE, a vehicle-mounted wireless terminal device, and so on.

It should be understood that the system (200) may not be limited to the above-described wireless devices. The system (200) may be extended to other wireless devices of different classes or categories providing different services while supporting, for example, Enhanced Mobile Broadband, eMBB, massive Machine-Type Communication, MTC, Ultra-Reliable Low Latency Communication, URLLC, Time Sensitive Networking, TSN, or the like.

In the wireless communication system (100), the network node (104) and the system (200) are connected through 3GPP 5G core network where specific network services and operations are provided through software components called network functions (NFs). The wireless communication system (100) hosts large scale applications.

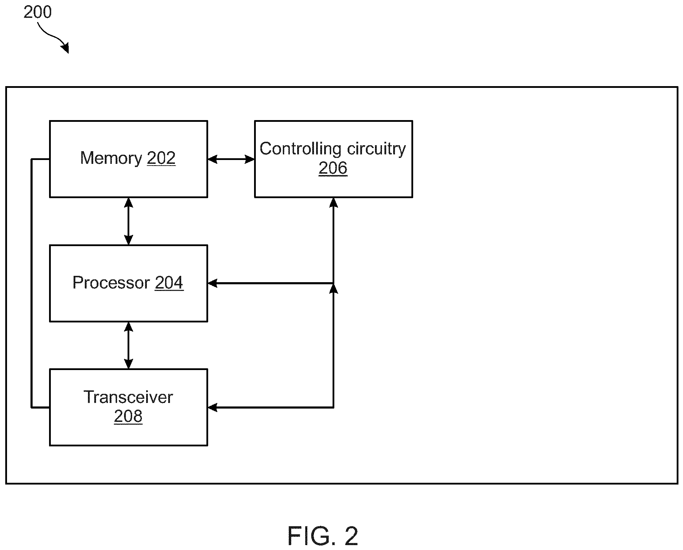

In an embodiment, FIG. 2 discloses a schematic block diagram illustrating an example system (200) for registering unknown objects into a device management system (not shown in FIGs). The objects may include and not limited to electrical and electromechanical devices, devices dealing with energy such as transport, control, management, generation, distribution, secure, operating, etc, communication assets for utilities.

As shown in FIG. 2, the system (200) further comprises one or more modules. The one or more modules may comprise a memory (202), a processor (204), a controlling circuitry (206), a driver (208). The controlling circuitry (206) may be adapted to control the other modules. The memory (202), the processor (204), and the driver (208) as well as the controlling circuitry (206) may be operatively connected to each other.

The memory (202) arranged to store a plurality of instructions to be executed by the processor (204). The processor (204) is arranged for receiving one or more object data related to an object. The object is unknown to the device management system. After receiving the one or more object data, the processor (204) extracts one or more object identifiers from the one or more object data. The one or more object identifiers are extracted to identify the one or more objects. The one or more object identifiers are transmitted by the processor (204) to an external source (not shown in the FIGs.) to identify a refined information about the object. The refined information is used to classify the object. The object may be classified as any type of device. In an example, the object may be classified as "devices electrical networks" or "utilities". The processor (204) then registers the object with the device management system according to the classification of the object. In an example, general function of the object such as a protection IED or circuit breaker device or a transformer and similar kind of information of the object are registered in the device management system. Further, the information of the object may also be extracted from existing construction drawings and schematics.

The controlling circuitry (206) may be adapted to control the steps as executed by the processor (204). For example, the controlling circuitry (206) may be adapted to extracting one or more object identifiers from the one or more object data, extracting one or more object identifiers, transmitting the one or more object identifiers to the external source, etc.

The driver (208) may be adapted to process the one or more object data related to the object received by the system (200).

In some embodiments, the object comprises electrical grid devices.

In some embodiments, the one or more object data comprises one or more images of the object.

In some embodiments, the one or more object identifiers comprises at least one of text elements, serial numbers, information about manufacture of the object, device type when the object is a device, color of the object, context information associated with the object, labels over the one or more objects.

In some embodiments, the one or more object identifiers are extracted by applying an Artificial Intelligence (AI) based image recognition method over the one or more object identifiers. Example AI algorithms may include variations of the Convolutional Neural Networks (R-CNN, Fast R-CNN), YOLO and so on and how the object identifiers are extracted depends on working of the AI algorithms.

Advantageously, the proposed embodiment provides automated method by extracting object identifiers of the objects by applying Artificial Intelligence (AI) based image recognition method.

In some embodiments, the external source comprises at least one of websites, soft copies of a document in at least one of a pdf or word document, other image documents, schematics, construction drawings, part lists, bill of materials, BOM and user inputs.

In some embodiments, the one or more additional details are identified through a Large Language Model (LLM), wherein the LLM maps the one or more object identifiers to an information present in the external source to generate the refined information. Further a user can interact with the LLM module to provide additional information, e.g., narrow the search space, request additional input images, etc.

Advantageously, the proposed system provides the LLM to map the object identifiers to information present in the external source to generate the refined information. The refined information helps the system to classify the objects and identify the object in a correct category.

In some embodiments, the refined information comprises at least one of features of the object, model and type of the object, and the source of generating the refined information.

In some embodiments, the processor is arranged for storing information about the sources used to identify the refined information about the object.

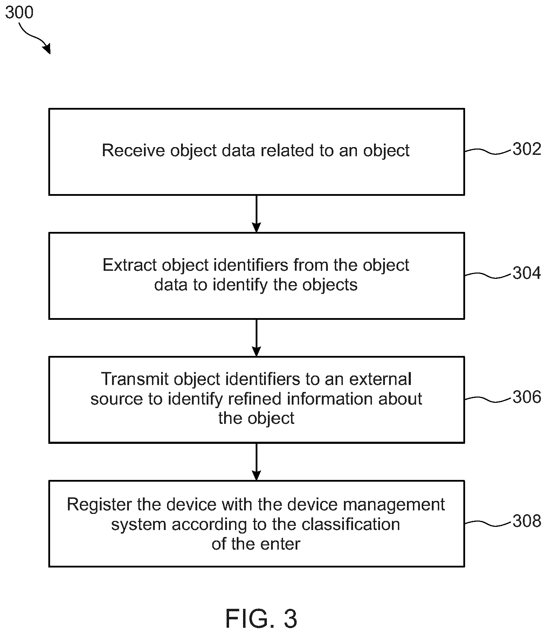

FIG. 3 shows a flowchart illustrating example steps for a method (300) for registering unknown objects into the device management system. The order in which the method (300) is described is not intended to be construed as a limitation, and any number of the described method blocks may be combined in any order to implement the method (300) or alternate methods. Additionally, individual blocks may be deleted from the method (300) without departing from the spirit and scope of the embodiments described herein.

At step (302), the method (300) comprises receiving the one or more object data related to the object. The object is unknown to the device management system. The request is received through the processor (204).

At step (304), the method (300) comprises extracting the one or more object identifiers from the one or more object data to identify the one or more objects. The extraction is performed through the processor (204).

At step (306), the method (300) comprises transmitting the one or more object identifiers to the external source to identify the refined information about the object. The refined information is used to classify the object.

At step 308, the method 300 comprises registering the object with the device management system according to the classification of the object.

Advantageously, embodiments herein provide the method (300) for registering the unknown object or devices to the device management system without requiring any manual registration process. The method (300) includes extracting object identifiers of the object which is unknown to the device management system. The object identifiers are extracted by applying an Artificial Intelligence (AI) based image recognition methods. Further, the object identifiers are transmitted to an external source to identify refined information about the object. The refined information helps to classify the objects. Thus, the method (300) provides an automated and effective way to register the objects, which were initially unknown to the device management system.

In some embodiments, the one or more object data comprises one or more images or video of the object.

In some embodiments, the one or more object identifiers comprises at least one of text elements, serial numbers, information about manufacture of the object, device type when the object is a device, color of the object, context information associated with the object, labels over the one or more objects.

In some embodiments, the one or more object identifiers are extracted by applying an Artificial Intelligence (AI) based image recognition method over the one or more object identifiers.

Advantageously, the proposed embodiment provides an automated method by extracting object identifiers of the objects by applying Artificial Intelligence (AI) based image recognition methods.

In some embodiments, the external source comprises at least one of websites, soft copies of a document in at least one of a pdf or word document, other image documents, schematics, construction drawings, part lists, bill of materials, BOM and user inputs.

In some embodiments, the one or more additional details are identified through a Large Language Model (LLM), wherein the LLM maps the one or more identifiers to an information present in the external source to generate the refined information.

Advantageously, the proposed method (300) maps the object identifiers to information present in the external source to generate the refined information using a Large Language Model (LLM). The refined information helps the system to classify the objects and identify the object in a correct category.

In some embodiments, the refined information comprises at least one of features of the object, model and type of the object, and the source of generating the refined information.

In some embodiments, the method comprises storing information about the sources used to identify the refined information about the object.

In some embodiments, the method (300) comprises receiving a user request regarding a replacement device for an existing device to be identified in the device management system. The method (300) further comprises extracting, through the processor, one or more device identifiers from one or more input data associated with the existing device. The method (300) further comprises comparing the one or more input data with at least one of the: one or more object identifiers, the refined information of the registered device and information about the sources. The method (300) further comprises suggesting the replacement device for replacing the existing device based on the search.

Advantageously, the proposed method provides a suggestion to replace certain devices. The LLM module of the device management system uses several sources of information such as information about model of the device and capabilities to suggest a replacement.

Optionally, additional details of the method (300) are similar to the details of the system (200) and hence are not repeated for the sake of brevity.

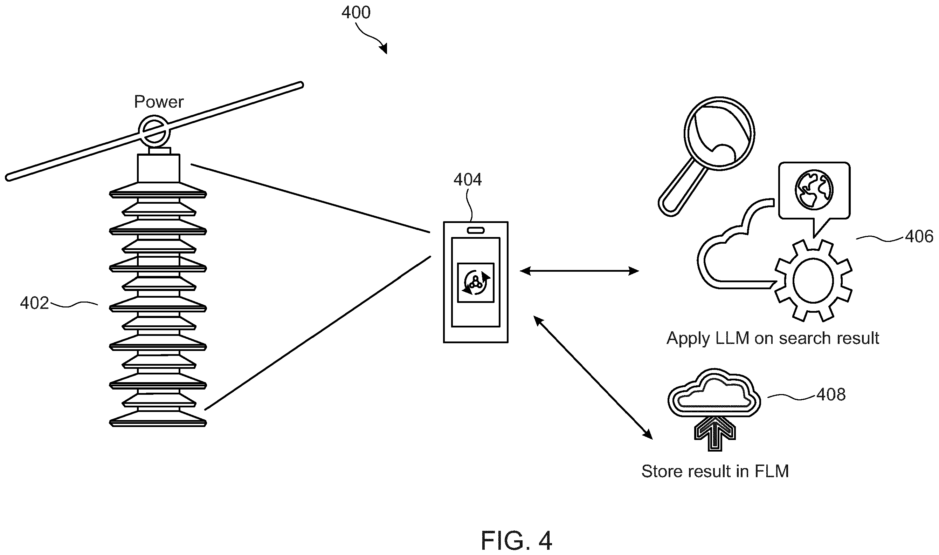

FIG. 4 shows an example system diagram (400) for registering unknown objects into the device management system according to some embodiments. As shown in FIG.4, one or more image of the object (402) is captured by a user using a handheld device (404). The object comprises an electrical grid device. The one or more image is either processed locally on the handheld device (404) or transferred to a FLM system module. The processing step applies AI image recognition methods to extract one or more object identifiers from the one or more images and labels about the target device. The one or more object identifiers may include a set of text elements, potentially consisting of labels, serial numbers, manufacturer, device type, color, context information. The user provides may provide his/her confirmation that the image processing task has identified the correct device category before processing the object identifiers. In an example, the set of text elements is then provided as input to the LLM module of the device management system (also referred to as FLM system). The FLM module processes the object identifiers such as text elements and, using additional sources of data such as online and offline documents, manuals, datasheets to identify refined information about the object. The refined information may include and not limited to device capabilities and model of the device or object. The refined information also contains the sources that were used to derive it (references to manuals, documents). For obtaining the refined information, the LLM module may interact with the user and required additional information (e.g., narrow the search space (406), request additional input images). Once the information of the object is refined, the object is registered in the device management system or FLM system. The information about the sources used to identify the refined information about the object are also stored (408) in the FLM system.

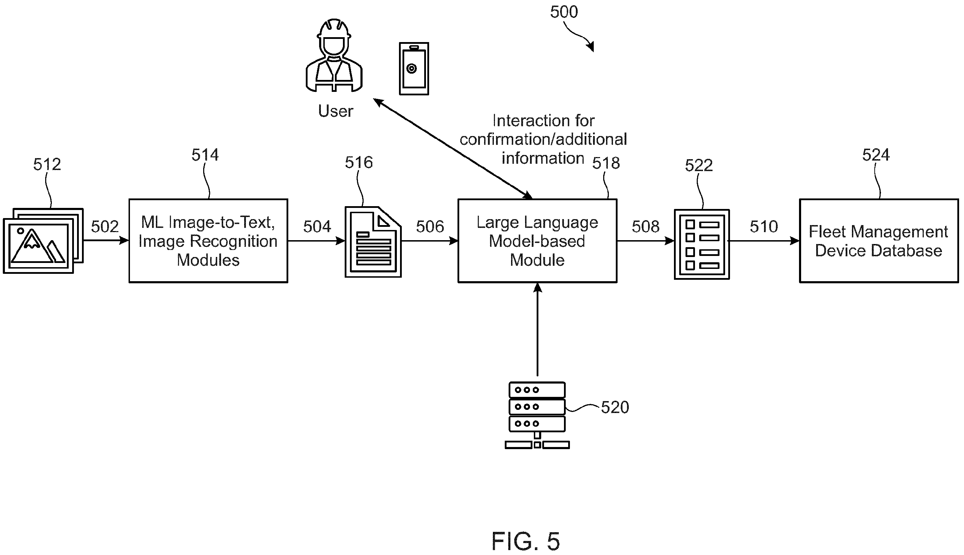

FIG. 5 shows an example flow diagram 500 showing example steps for registering unknown objects into the device management system according to some embodiments. After receiving one or more object data (512) related to the object, as shown in FIG. 5, at step (502), the object data are provided to an image recognition module (514). The one or more object data comprises one or more images of the object.

At step (504), one or more object identifiers (516) are extracted from the image of the object through the image recognition module (504). The one or more object identifiers (516) comprises at least one of text elements, serial numbers, information about manufacture of the object, device type when the object is a device, color of the object, context information associated with the object, labels over the one or more objects.

At step (506), the one or more object identifiers (516) are provided to the LLM module (518) to classify the object. Further at step (506), the user may interact with the LLM module (518) or provide additional information about the object to the LLM module (518). Further, the user may provide online/offline documents, datasheets about the object to the LLM module (518) manually at step (506) to obtain refined information about the object.

At step 508, the LLM module (518) provides the refined information (522) to a fleet management device database (524) for registering the object. The refined information (522) may include information about the object or device model capabilities and references to manuals.

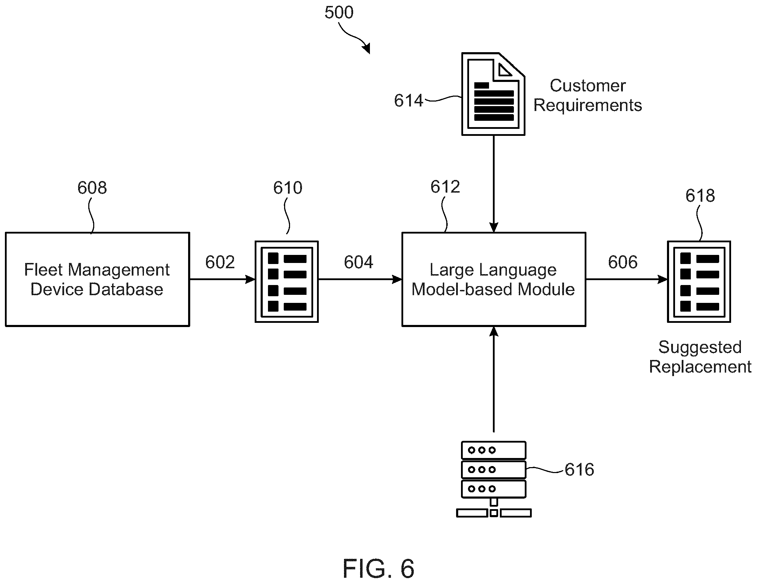

In some embodiments, the processor (204) (shown in FIG. 2) is further arranged for suggesting replacement device in the system (200). FIG. 6 shows an example flow diagram showing example steps for suggesting replacement device in the system (200) according to some embodiments. The processor (204) is arranged for receiving a user request regarding a replacement device for an existing device to be identified in the device management system. After receiving the user request regarding the replacement device, the processor (204) extracts one or more device identifiers from the one or more input data associated with the existing device. The processor (204) then compares the one or more input data with at least one of the: one or more object identifiers, the refined information of the registered device and information about the sources or the external sources. The processor (204) then suggests the replacement device for replacing the existing device based on the search.

After receiving the user request regarding the replacement device, as shown in FIG. 6, at step 602, one or more device identifiers (610) of one or more input data are extracted by the processor (204). In an example, the one or more device identifiers (610) may include information about the object or device model capabilities and references to manuals. In an example, the information (610) is extracted from a fleet management device database (608).

At step 604, the one or more device identifiers (610) are provided to a Large Language Model, LLM module (612) as input data. Further, customer requirements (614) and information and datasheet (616) for replacement devices may be provided to the LLM module (612) at step 604. The one or more input data are compared with at least one of the: one or more object identifiers, the refined information of the registered device and information about the sources.

At step 606, the LLM module (612) may suggest replacement (618) device for replacing the existing device based on the search.

Advantageously, the proposed system provides a suggestion to replace certain devices. The LLM module of the device management system uses several sources of information such as information about model of the device and capabilities to suggest a replacement.

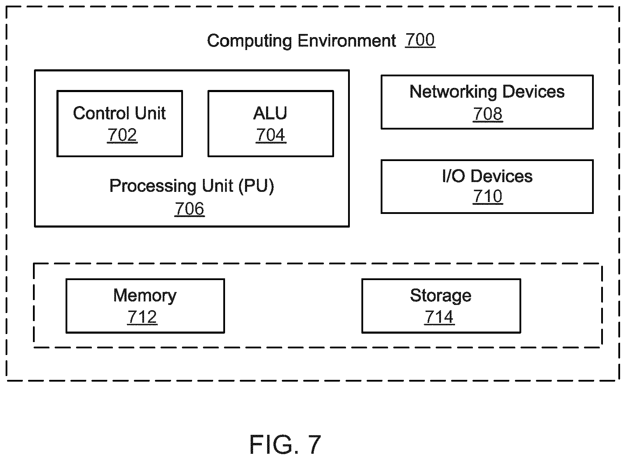

FIG. 7 illustrates an example-computing environment (700) implementing the system (200) and the method (300) as shown in FIGS. 2, and 3 for registering unknown objects into the device management system. As depicted in FIG. 5, the computing environment (700) comprises at least one data processing module (706) that is equipped with a control module (702) and an Arithmetic Logic Unit (ALU) (704), a plurality of networking devices (708) and a plurality Input output, I/O devices (710), a memory (712), a storage (714). The data processing module (706) may be responsible for implementing the system and the method described in FIGS. 2 and 3 respectively. For example, the data processing module (706) in some embodiments be equivalent to the controlling circuitry of the platform described above in conjunction with FIGS. 2 and 3. The data processing module (506) is capable of executing software instructions stored in memory (712). The data processing module (706) receives commands from the control module (702) in order to perform its processing. Further, any logical and arithmetic operations involved in the execution of the instructions are computed with the help of the ALU (704).

The computer program is loadable into the data processing module (706), which may, for example, be comprised in an electronic apparatus (such as the platform). When loaded into the data processing module (506), the computer program may be stored in the memory (712) associated with or comprised in the data processing module (706). According to some embodiments, the computer program may, when loaded into and run by the data processing module (706), cause execution of method steps according to, for example, any of the methods illustrated in FIGS. 2 and 3, or otherwise described herein.

The overall computing environment (700) may be composed of multiple homogeneous and/or heterogeneous cores, multiple CPUs of different kinds, special media and other accelerators. Further, the plurality of data processing modules 606 may be located on a single chip or over multiple chips.

The algorithm comprising of instructions and codes required for the implementation are stored in either the memory (712) or the storage (714) or both. At the time of execution, the instructions may be fetched from the corresponding memory (712) and/or storage (714) and executed by the data processing module (706).

In case of any hardware implementations various networking devices (708) or external I/O devices (710) may be connected to the computing environment to support the implementation through the networking devices (708) and the I/O devices (710).

The embodiments disclosed herein can be implemented through at least one software program running on at least one hardware device and performing network management functions to control the elements. The elements shown in FIG. 7 include blocks which can be at least one of a hardware device, or a combination of hardware device and software module.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the scope of the disclosure.

## Claims

1. A system (200) for registering unknown objects into a device management system, the system (200) comprising:
a processor (204); and
a memory (202) arranged to store a plurality of instructions to be executed by the processor (204), wherein the processor (204) is arranged for:
receiving one or more object data related to an object, wherein the object is unknown to the device management system;
extracting one or more object identifiers from the one or more object data to identify the one or more objects;
transmitting the one or more object identifiers to an external source to identify a refined information about the object, wherein the refined information is used to classify the object; and
registering the object with the device management system according to the classification of the object.

2. The system (200) according to claim 1, wherein the object comprises electrical grid devices.

3. The system (200) according to any claims 1 or 2, wherein the one or more object data comprises one or more images or video of the object.

4. The system (200) according to any of the preceding claims, wherein the one or more object identifiers comprises at least one of text elements, serial numbers, information about manufacture of the object, device type when the object is a device, color of the object, context information associated with the object, labels over the one or more objects.

5. The system (200) according to any of the preceding claims, wherein the one or more object identifiers are extracted by applying an Artificial Intelligence (AI) based image recognition method over the one or more object identifiers.

6. The system (200) according to any of the preceding claims, wherein the external source comprises at least one of websites, soft copies of a document in at least one of a pdf or word document, other image documents, schematics, construction drawings, part lists, bill of materials, BOM and user inputs.

7. The system (200) according to any of the preceding claims, wherein the one or more additional details are identified through a Large Language Model (LLM), wherein the LLM maps the one or more identifiers to an information present in the external source to generate the refined information, and wherein the refined information comprises at least one of features of the object, model and type of the object, and the source of generating the refined information.

8. The system (200) according to any of the preceding claims, wherein the processor (204) is arranged for:
receiving a user request regarding a replacement device for an existing device to be identified in the device management system;
extracting, through the processor (204), one or more device identifiers from one or more input data associated with the existing device;
comparing the one or more input data with at least one of the: one or more object identifiers, the refined information of the registered device and information about the sources; and
suggesting the replacement device for replacing the existing device based on the search.

9. A computer implemented method (300) for registering unknown objects into a device management system, the method (300) comprising:
receiving (302), through a processor (204), one or more object data related to an object, wherein the object is unknown to the device management system;
extracting (304), through the processor (204), one or more object identifiers from the one or more object data to identify the one or more objects;
transmitting (306), the one or more object identifiers to an external source to identify a refined information about the object, wherein the refined information is used to classify the object; and
registering (308) the object with the device management system according to the classification of the object.

10. The method (300) according to claim 11, wherein the one or more object data comprises one or more images or video of the object.

11. The method (300) according to claim 11 or 12, wherein the one or more object identifiers comprises at least one of text elements, serial numbers, information about manufacture of the object, device type when the object is a device, color of the object, context information associated with the object, labels over the one or more objects.

12. The method (300) according to any of the claims 11-13, wherein the one or more object identifiers are extracted by applying an Artificial Intelligence (AI) based image recognition method over the one or more object identifiers.

13. The method (300) according to any of the claims 11-14, wherein the external source comprises at least one of websites, soft copies of a document in at least one of a pdf or word document, other image documents, schematics, construction drawings, part lists, bill of materials, BOM and user inputs.

14. The method (300) according to any of the claims 11-15, wherein the one or more additional details are identified through a Large Language Model (LLM), wherein the LLM maps the one or more identifiers to an information present in the external source to generate the refined information.

15. The method (300) according to any of the claims 11-18, comprising:
receiving a user request regarding a replacement device for an existing device to be identified in the device management system;
extracting, through the processor (204), one or more device identifiers from one or more input data associated with the existing device;
comparing the one or more input data with at least one of the: one or more object identifiers, the refined information of the registered device and information about the sources; and
suggesting the replacement device for replacing the existing device based on the search.
